Europäisches Patentamt

European Patent Office

Office européen des brevets

(11) Publication number: **0 066 695**
**B1**

(12) **EUROPEAN PATENT SPECIFICATION**

(45) Date of publication of patent specification: **22.01.86**

(21) Application number: **82103199.4**

(22) Date of filing: **16.04.82**

(51) Int. Cl.⁴: **G 21 C 19/36,** G 21 C 19/06

(54) Spent fuel consolidation apparatus.

(30) Priority: **29.05.81 US 268225**
**29.05.81 US 268311**

(43) Date of publication of application:
**15.12.82 Bulletin 82/50**

(45) Publication of the grant of the patent:
**22.01.86 Bulletin 86/04**

(84) Designated Contracting States:
**CH DE GB IT LI NL SE**

(56) References cited:
**FR-A-2 020 324**
**GB-A-1 547 152**
**US-A-3 352 003**
**US-A-3 748 713**

(73) Proprietor: **WESTINGHOUSE ELECTRIC CORPORATION**
**Westinghouse Building Gateway Center**
**Pittsburgh Pennsylvania 15222 (US)**

(72) Inventor: **Pomaibo, Paul**
**2573 Hi-Ridge Dr.**
**North Huntingdon Pennsylvania (US)**
Inventor: **Tolino, Ralph W.**
**1514 Wood Street**
**Pittsburgh Pennsylvania (US)**
Inventor: **Hicken, Michael G.**
**3515 Eastview Dr.**
**Murrysville Pennsylvania (US)**
Inventor: **Kirschensteiner, Fred**
**352 Avenue F.**
**Pittsburgh Pennsylvania (US)**
Inventor: **True, Duane A.**
**21 Boulder Drive**
**Pittsburgh Pennsylvania (US)**
Inventor: **Taleff, Alexander**
**3838 Bornaby Dr.**
**Pittsburgh Pennsylvania (US)**

(74) Representative: **Holzer, Rupprecht, Dipl.-Ing.**
**Philippine-Welser-Strasse 14**
**D-8900 Augsburg (DE)**

Courier Press, Leamington Spa, England.

## Description

This invention relates to storage of nuclear fuel assemblies and more particularly to the consolidation and storage of spent nuclear fuel rods in a relatively small storage area.

After a period of operation of a nuclear reactor, the fuel assemblies comprising the core of the nuclear reactor must be rearranged with the depleted or spent fuel assemblies being replaced with fresh ones. The spent fuel assemblies are removed from the reactor vessel and generally stored in a pool of water on the reactor site. Since a conventional fuel assembly comprises structure other than fuel rods such as grids and control rod guide tubes, a spent fuel assembly occupies more space in the storage pool than would be required for the individual fuel rods. Because the storage pool has a finite volume it would be desirable to be able to store the fuel rods in a closely packed array and with a minimum of support structure to thereby maximize the amount of spent nuclear fuel that can be stored in a given volume of the storage pool. This would provide a greater storage capacity for the spent fuel rods until the fuel rods are transported off the reactor site for storage or reprocessing.

However, since the spent fuel rods have been irradiated during reactor operation, they are highly radioactive and can be handled only by remote manipulators and since they are still producing heat, the fuel rods must remain submerged in a coolant. The radioactive nature of the spent fuel assemblies increases the difficulty of not only transporting the spent fuel assembly but of also dismantling the fuel assembly.

Therefore, it is the principal object of the present invention to provide a system for removing the spent fuel rods from a spent fuel assembly and for storing the spent fuel rods in as small a volume as is possible.

With this object in view, the present invention resides in an apparatus for remotely consolidating nuclear fuel rods taken from fuel assemblies in which the fuel rods are supported spaced from each other in first and second perpendicular directions, characterized by row ordering means arranged to accept a plurality of nuclear fuel rods for rearranging said fuel rods into a different configuration, first consolidation means (82) so connected to said row ordering means as to compact individual rows of said fuel rods in said first direction as said fuel rods exit said row ordering means and second consolidation means arranged adjacent said first consolidation means so as to accept individual rows of fuel rods for compacting in the second direction a plurality of fuel rods compacted already in said first direction.

The invention will become more readily apparent from the following description taken in conjunction with the accompanying drawings, wherein:

Figure 1 is a view in perspective of the spent fuel consolidation system;

Figure 2 is a view in perspective of the internal cutter mechanism;

Figure 3 is a cross-sectional view of the gripper mechanism;

Figures 4—6 are views in perspective of the spent fuel consolidation system;

Figure 7 is a partial view in elevation of the consolidation mechanism;

Figure 8 is a view along line VIII—VIII of Figure 7;

Figure 9 is a view along line IX—IX of Figure 7;

Figure 10 is a view along line X—X of Figure 7;

Figure 11 is a view along line XI—XI of Figure 10;

Figure 12 is a view along line XII—XII of Figure 7;

Figure 13 is a view along line XIII—XIII of Figure 7; and

Figure 14 is a view along line XIV—XIV of Figure 7.

When it is desired to consolidate spent fuel rods of a nuclear fuel assembly, it is first necessary to disassemble the fuel assembly and then rearrange the fuel rods into a compact configuration. The invention described herein provides a system for removing the fuel rods from the fuel assembly and for remotely rearranging the fuel rods in a consolidated fashion.

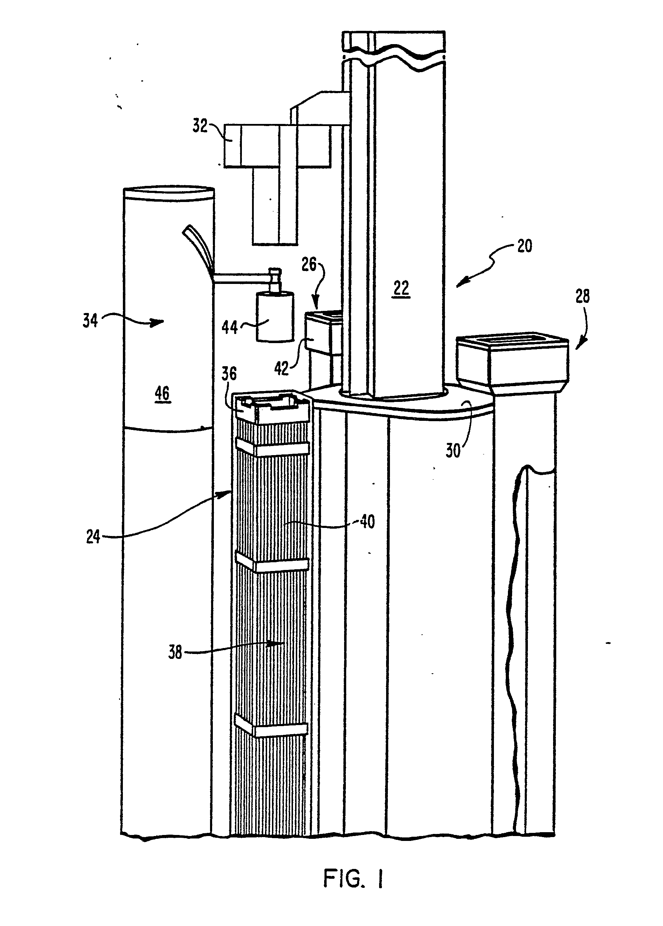

Referring to Figure 1, the spent fuel consolidation system comprises a rotatable platform 20 that is capable of rotating about its vertical axis under the influence of a drive system (not shown) and that is capable of operating while completely submerged in a fluid such as water. Platform 20 comprises a vertical support 22, a fuel assembly station 24, consolidation station 26 and canister station 28. Fuel assembly station 24, consolidation station 26, and canister station 28 are attached to support plate 30 which is rotatably attached to vertical support 22. Support plate 30 is arranged such that when it is rotated about vertical support 22, fuel assembly station 24, consolidation station 26 and canister station 28 may be selectively positioned with respect to gripper mechanism 32 which is slidably mounted on vertical support 22. A nozzle removal mechanism 34 is also arranged near platform 20 for removing top nozzle 36 from fuel assembly 38. Fuel assembly 38 may be one such as that described in US—A—3,791,466.

In general, fuel assembly station 24 provides a station for holding spent fuel assembly 38 while top nozzle 36 and spent fuel rods 40 are removed therefrom. Fuel rods 40 are generally cylindrical metallic tubes containing nuclear fuel as is well understood in the art. Consolidation station 26 provides a station for rearranging fuel rods 40 into a closely packed configuration without the need for the remainder of the fuel assembly support structure. Canister station 28 provides a station for locating a canister 42 for accepting and holding fuel rods 40 after fuel rods 40 have been consolidated by consolidation station 26.

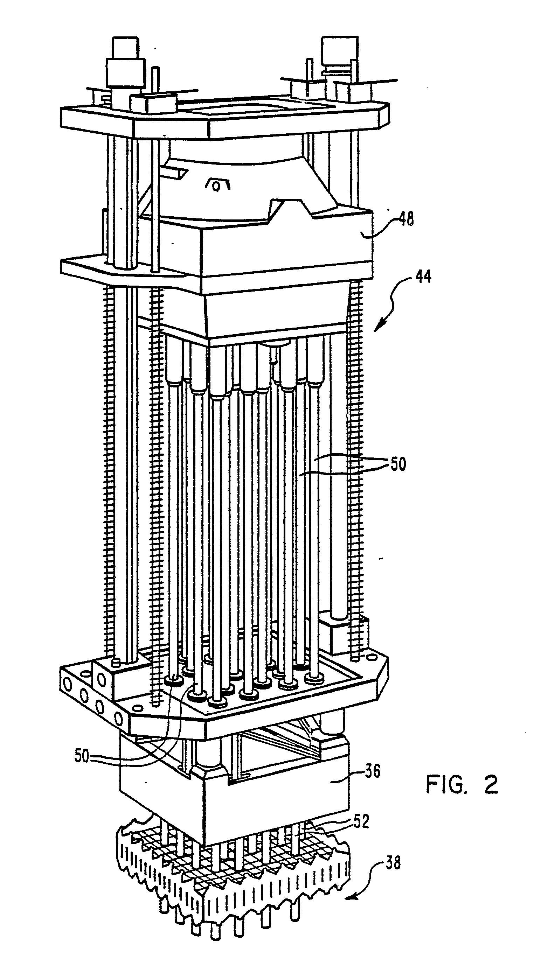

Referring now to Figures 1 and 2, nozzle removal mechanism 34 comprises an internal cutter mechanism 44 that is slidably mounted on positioning mechanism 46. Internal cutter mechanism 44 may comprise a drive mechanism 48 with a plurality of internal cutters 50 connected thereto. Positioning mechanism 46 serves to position internal cutter mechanism 44 over fuel assembly 38 of fuel assembly station 24. Since the typical fuel assembly 38 comprises a top nozzle 36 which is attached to a plurality of control rod guide tubes 52, it is necessary to cut control rod guide tubes 52 so that the upper portion of control rod guide tubes 52 and top nozzle 36 may be removed to expose the top ends of the spent fuel rods 40. When internal cutter mechanism 44 is lowered onto top nozzle 36 by positioning mechanism 46, an internal cutter 50 is slid into each control rod guide tube 52. Once in this position, drive mechanism 48 is activated which causes each internal cutter 50 to rotate in each control rod guide tube 52 and to sever the top section of each control rod guide tube 52 from the remainder of the control rod guide tube. Positioning mechanism 46 then removes internal cutter mechanism 44 from top nozzle 36.

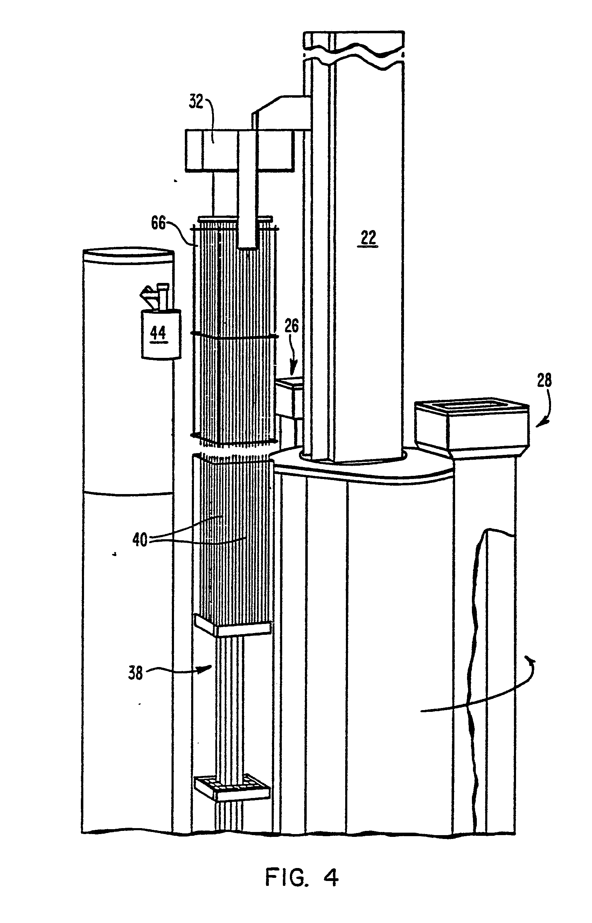

Referring now to Figure 3, gripper mechanism 32 may comprise a metal first plate 56, a metal second plate 58 and a flexible member 60 disposed therebetween. First plate 56 may be connected to a rod 62 that is disposed through second plate 58 and flexible member 60 and is connected to an hydraulic cylinder 64. First plate 56, second plate 58, and flexible member 60 have holes therein for accommodating the insertion of fuel rods 40 such that when hydraulic cylinder 64 is activated first plate 56 and second plate 58 are drawn together thereby squeezing flexible member 60, which may be a rubber plate, into contact with fuel rods 40. In this manner, fuel rods 40 may be firmly gripped for removal from fuel assembly 38.

Referring to Figure 4, when top nozzle 36 has been removed from fuel assembly 38, internal cutter mechanism 44 is moved away from fuel assembly station 24 and gripper mechanism 32 is moved downwardly along vertical member 22 and into contact with the exposed fuel rods 40 of fuel assembly 38. Gripper mechanism 32 then grips each fuel rod 40 as previously described. With gripper mechanism 32 gripping each fuel rod 40, gripper mechanism 32 is moved upwardly along vertical support 22. Since fuel assembly 38 is locked at its lower end to fuel assembly station 24, the upward pulling of fuel rods 40 by gripper mechanism 32 removes fuel rods 40 from the remainder of fuel assembly 38. In addition, a cage 66 which may have comb-like fingers may be attached to gripper mechanism 32 for maintaining the alignment of fuel rods 40 relative to each other. In this manner, fuel rods 40 can be removed from the remainder of fuel assembly 38.

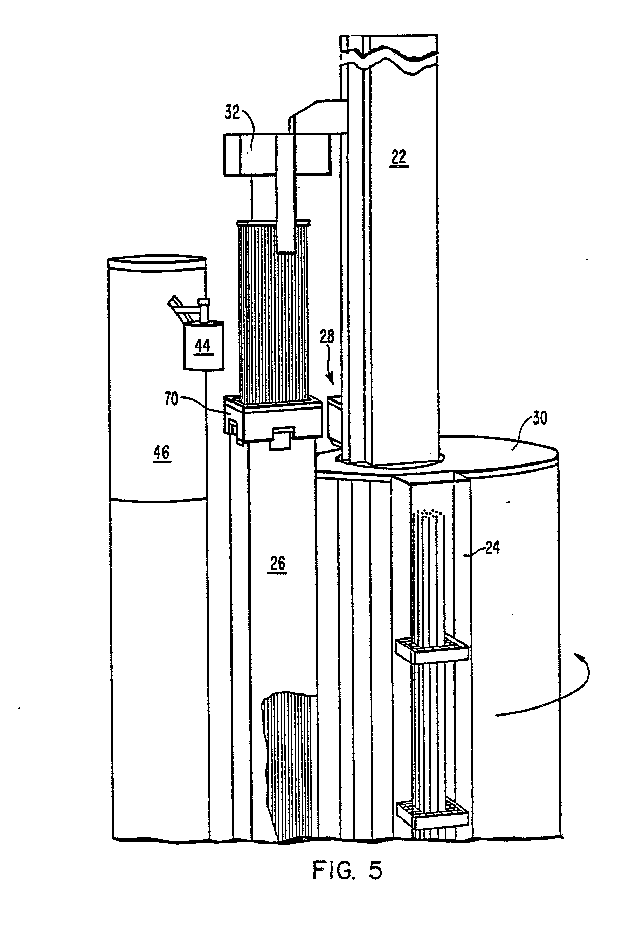

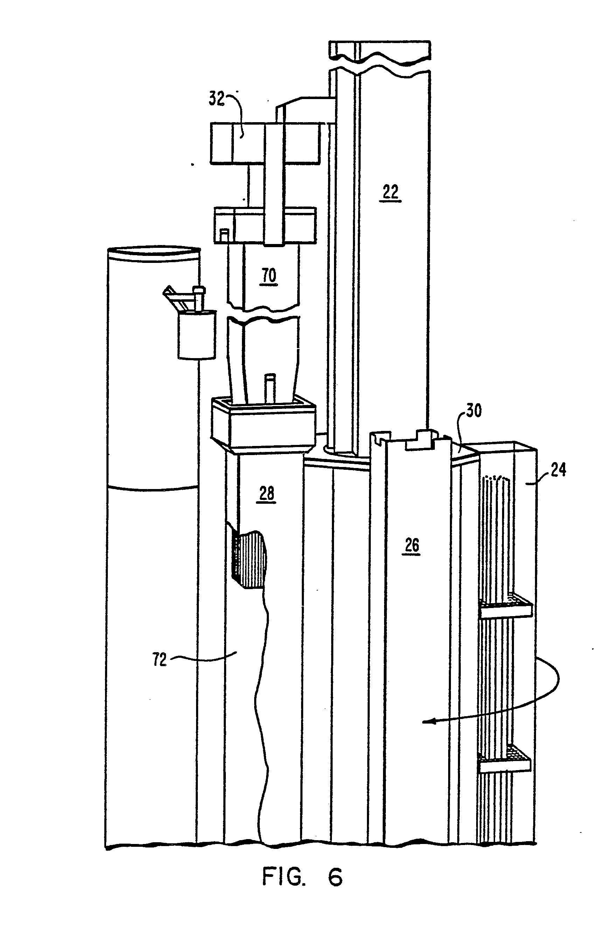

Referring now to Figures 4, 5 and 6 with gripper mechanism 32 in its uppermost position, platform 20 may be rotated which will cause consolidation station 26 to be positioned under gripper mechanism 32 and fuel rods 40. Next, gripper mechanism 32 is lowered along vertical support 22 so that fuel rods 40 are inserted into consolidation mechanism 70 of consolidation station 26. Consolidation mechanism 70 vertically and horizontally packs fuel rods 40 as fuel rods 40 are lowered into consolidation mechanism 70 thereby closely packing fuel rods 40. When gripper mechanism 32 has reached its lowermost position, gripper mechanism 32 releases fuel rods 40 so that fuel rods 40 are completely contained in consolidation mechanism 70. Next, gripper mechanism 32 by means of a conventional gripper (not shown), is caused to grip consolidation mechanism 70. While holding consolidation mechanism 70, gripper mechanism 32 is again raised along vertical support 22 until consolidation mechanism 70 with the fuel rods 40 therein is raised clear of consolidation station 26. With consolidation mechanism 70 lifted clear of consolidation station 26, platform 20 is again rotated until canister station 28 is located under consolidation mechanism 70. When consolidation mechanism 70 is over canister station 28, gripper mechanism 32 is lowered thereby positioning consolidation mechanism 70 on a canister 72 of canister station 28. With consolidation mechanism 70 positioned on canister 72, the bottom end of consolidation mechanism 70 is remotely opened thereby depositing fuel rods 40 into canister 72 in a closely packed fashion. Each canister 72 may be arranged with a divider so that each canister 72 can hold more than one set of consolidated fuel rods 40. Once fuel rods 40 have been deposited in canister 72, consolidation mechanism 70 may be returned to consolidation station 26 by lifting consolidation mechanism 70 and rotating platform 20 in a reverse direction.

When consolidation mechanism 70 has been returned to consolidation station 26 and when the remainder of fuel assembly 38 has been removed from fuel assembly station 24, the spent fuel consolidation system is ready to accept an additional spent fuel assembly in fuel assembly station 24. Thus, the system may be used to consolidate several sets of fuel rods 40 into a smaller configuration and store them in a single canister, while the fuel rods are maintained underwater. when a particular canister 72 is filled in this manner, the canister may be remotely moved to a spent fuel storage pool for further storage.

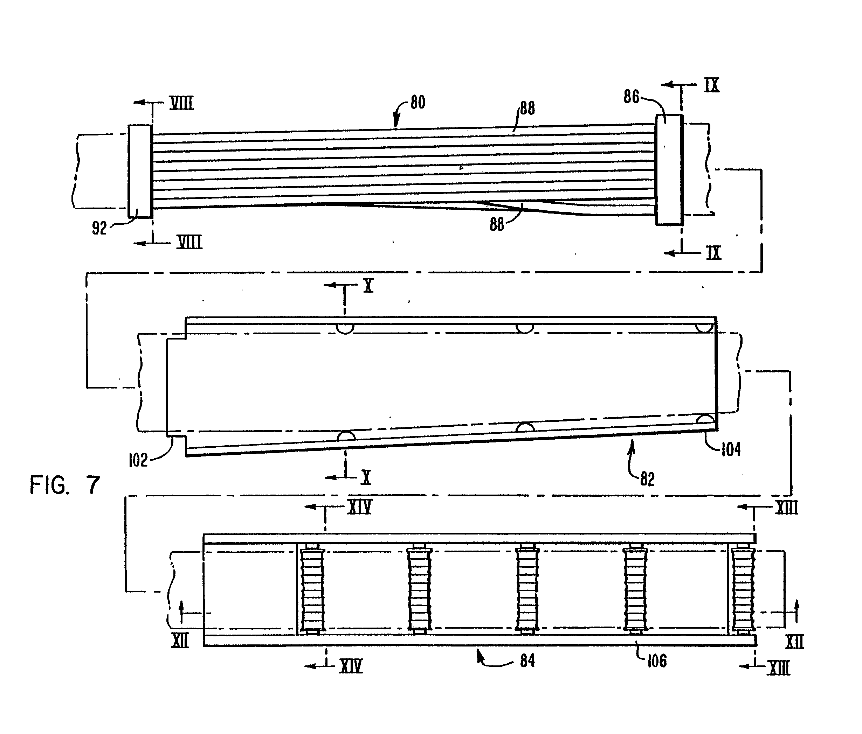

Referring now to Figures 7—9, consolidation mechanism 70 comprises a row ordering section 80, a horizontal consolidation section 82, and a vertical consolidation section 84. Row ordering sections 80 comprises a first frame 86 manufactured from a material such as aluminum for supporting an array of hollow guide tubes 88. Guide tubes 88 may be stainless steel tubes having a length of approximately 2 m and having an inside diameter of approximately 1.3 cm for accommodating the insertion of fuel rods 40. Guide tubes 88 are arranged in first frame 86 to conform to the same arrangement as fuel rods 40 have in a fuel assembly such that when fuel rods 40 are introduced into consolidation mechanism 70 by gripper mechanism 32 each fuel rod 40 slides into a separate guide tube 88. In addition to guide tubes 88, a plurality of plugs 90 are disposed between guide tubes 88 in a position to correspond to the positions of a fuel assembly that have no fuel rods such as control rod locations. Plugs 90 serve to maintain alignment of guide tubes 88 and to maintain a configuration corresponding to that of fuel rods 40 in a fuel assembly.

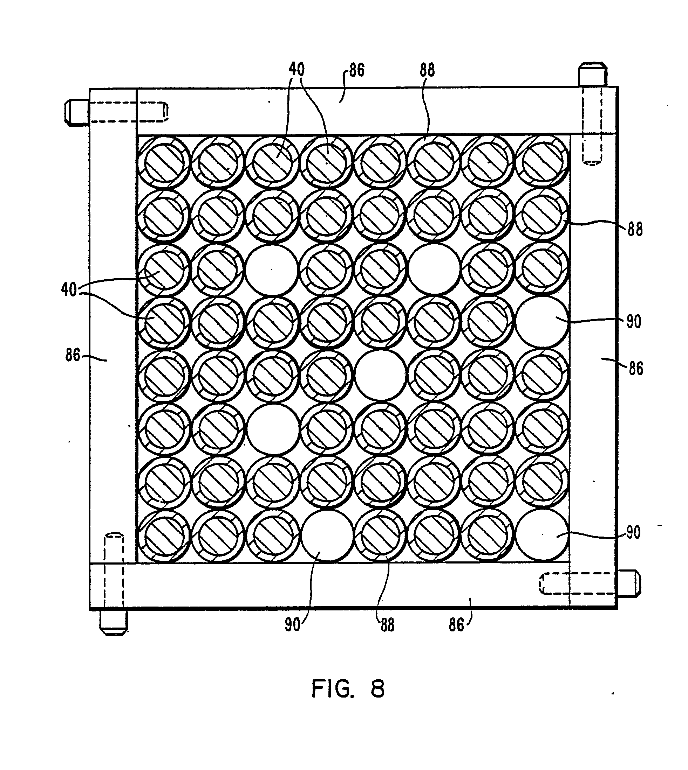

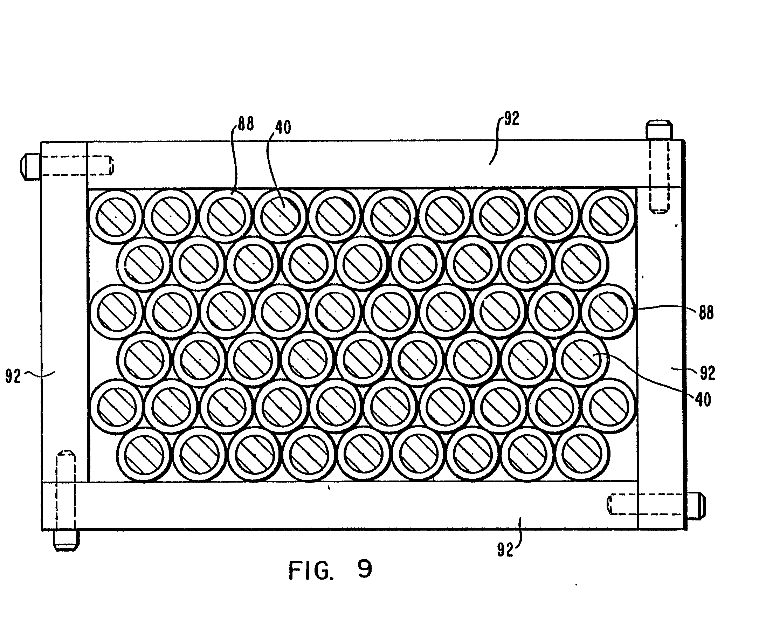

Row ordering section 80 also comprises an aluminum second frame 92 for supporting the other end of guide tubes 88. However, guide tubes 88 are not arranged in second frame 92 in the same configuration as in first frame 86. Rather, some of guide tubes 88 may be slightly curved or bent so as to form a closely packed array of guide tubes 88 as shown in Figure 9. As can be seen from a comparison of Figures 8 and 9, guide tubes 88 extend from first frame 86 to second frame 92 but the ends of some of the guide tubes 88 are arranged in a different configuration in each of such frames. This arrangement of guide tubes 88 provides a means by which a set of fuel rods 40 having the same configuration as the fuel rods in a fuel assembly can be introduced in one end of guide tubes 88 and moved through guide tubes 88 to exit guide tubes 88 in a more closely packed array. it should be noted that not only does the configuration in second frame 92 eliminate plugs 90 but it may also transform the configuration of first frame 86 from a substantially square array to a substantially rectangular array. Of course, the particular array chosen for second frame 92 is primarily dependent on the configuration chosen for the final storage of fuel rods 40. Since the length of each fuel rod 40 exceeds the length of each guide tube 88, several of the fuel rods 40 may be slightly bent during its travel through guide tubes 88. However, such slight bending is well within the flexibility capabilities of a typical fuel rod 40. Moreover, fuel rods 40 can be moved through guide tubes 88 under mere gravitational force due to the weight of each fuel rod 40 or they may be pushed through guide tubes 88 without damage to the fuel rods 40.

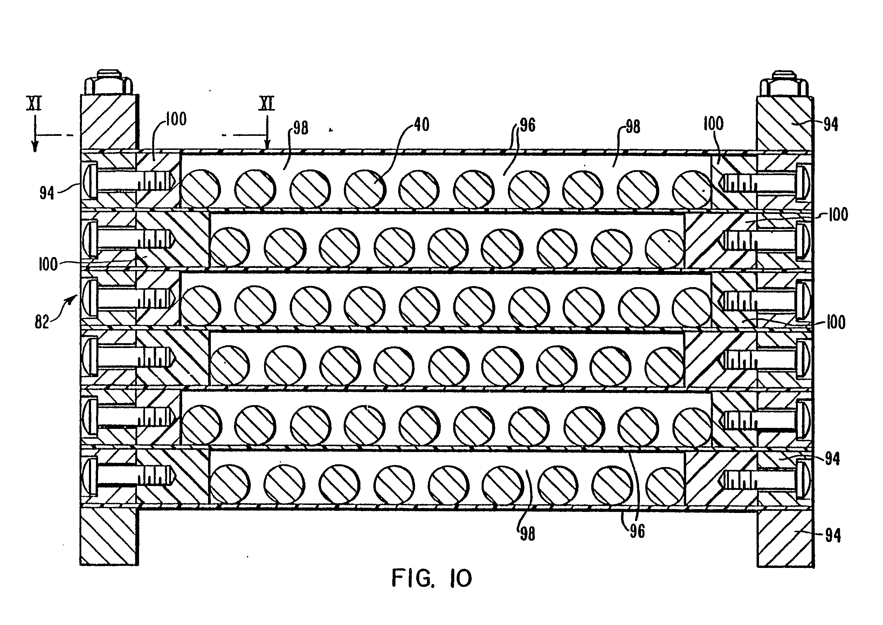

Referring now to Figures 7, 10 and 11, horizontal consolidation section 82 comprises a first housing 94 having a plurality of horizontal stainless steel plates 96 attached thereto defining a plurality of horizontal spaces 98 for accommodating fuel rods 40 as fuel rods 40 exit row ordering section 80. A plurality of spacers 100 are attached to first housing 94 and are disposed between plates 96 in spaces 98 for contacting the outermost fuel rod 40 in each space 98. The spacers 100 in alternate spaces 98 may be of different lengths for contacting the outermost fuel rod 40 based on the configuration of fuel rods 40 in each space 98. The ends of guide tubes 88 of row ordering section 80 are disposed in spaces 98 and between plates 96 at first end 102 of horizontal consolidation section 82 for introducing fuel rods 40 into the corresponding space 98. First housing 94 is arranged to have a longer width at first end 102 than at second end 104 so that as fuel rods 40 are moved therethrough, the outermost fuel rod 40 is moved inwardly by contacting spacers 100 thereby horizontally closely packing each horizontal row of fuel rods 40 while maintaining the vertical spacing between each horizontal row of fuel rods 40 by means of plates 96. In this manner, horizontal consolidation section 82 provides a means to horizontally compact fuel rods 40 as they exit row ordering section 80.

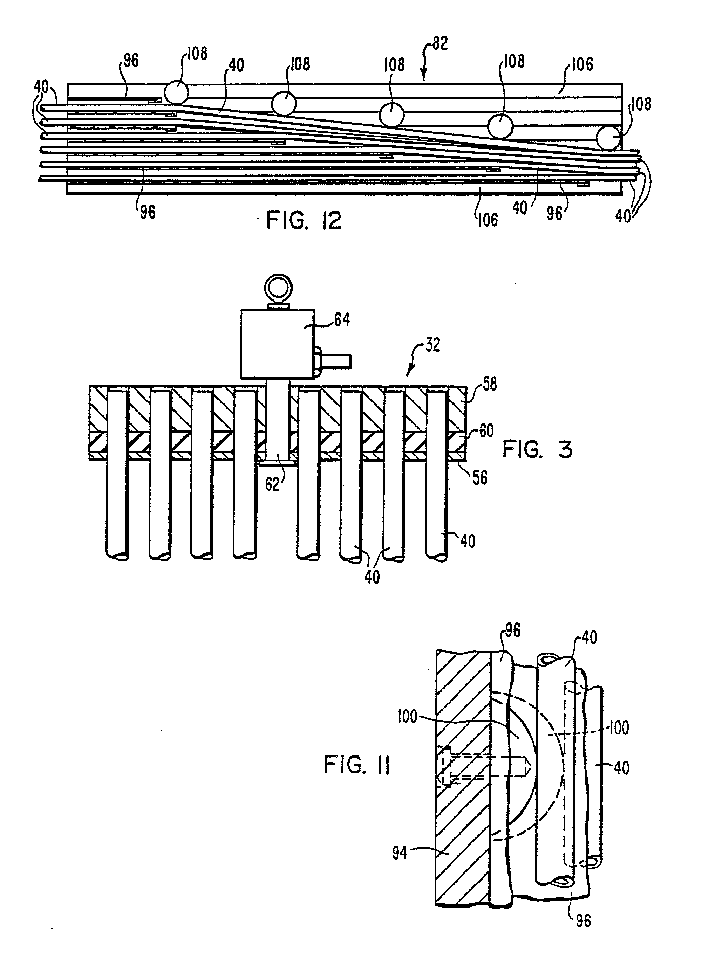

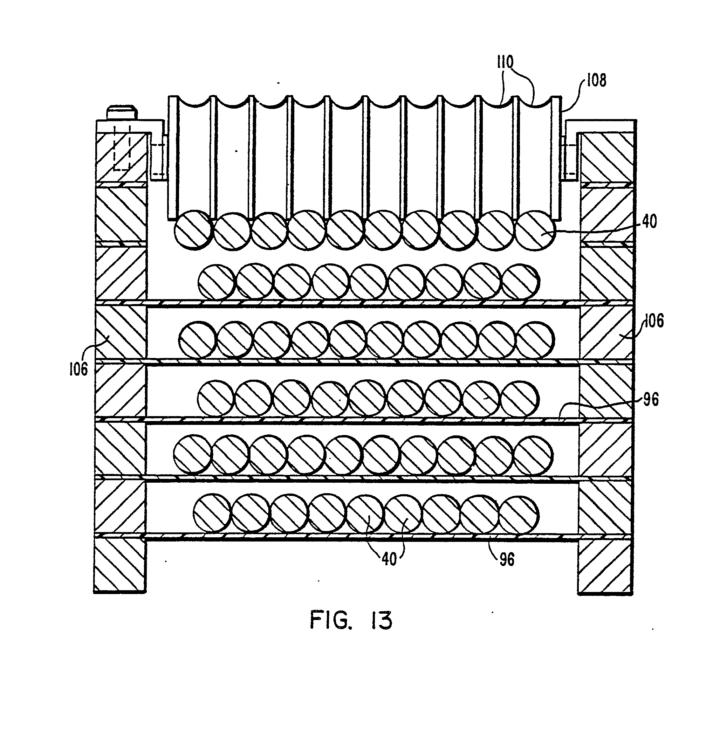

Referring to Figures 7 and 12—14, vertical consolidation section 84 comprises a second housing 106 attached to first housing 94 and arranged to support plates 96 which extend from first housing 94 into second housing 106. As shown in Figure 12, plates 96 are of different lengths so that the uppermost plates 96 are shorter than the lowermost plates 96 and with the intermediate plates 96 having a length longer than the uppermost plates 96 and shorter than the lowermost plates 96. In this arrangement, each succeeding plate 96 is generally longer than the preceding one from top to bottom. In addition, a plurality of rollers 108 are mounted on second housing 106 and arranged to contact fuel rods 40 as fuel rods 40 exit plates 96. Rollers 108 are attached to second housing 106 at different elevations corresponding to the ends of plates 96 such that as a row of fuel rods 40 passes beyond the end of a plate 96, the fuel rods contact a roller 108 for maintaining the horizontal alignment of the fuel rods 40 and for slightly bending the fuel rods downwardly and into contact with the next row of fuel rods 40. Rollers 108 may be formed with grooves 110 for accommodating the shape of fuel rods 40 and for maintaining the horizontal alignment of fuel rods 40.

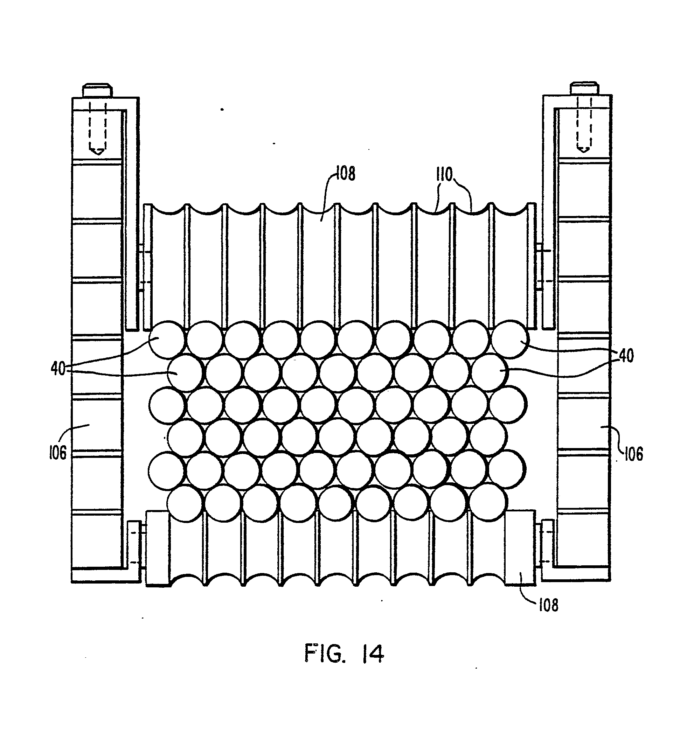

Referring to Figure 12, as fuel rods 40 are moved through vertical consolidation section 84, the uppermost row of fuel rods 40 exits plates 96 first and contacts a roller 108 that tends to bend fuel rods 40 downwardly. As fuel rods 40 proceed through vertical consolidation section 84, each consecutive horizontal row of fuel rods 40 exits plates 96 and contacts an adjacent row of fuel rods 40 with the uppermost rod of fuel rods in contact with a roller 108. With each succeeding roller 108 in a lower vertical location with respect to second housing 106 and with respect to fuel rods 40, rollers 108 cause fuel rods 40 to be vertically compacted until fuel rods 40 exit vertical consolidation section 84 in a configuration as shown in Figure 14. In this manner, vertical consolidation section 84 provides a means to vertically consolidate fuel rods 40 as fuel rods 40 exit horizontal consolidation section 82. Fuel rods 40 thereby exit consolidation mechanism 40 in a horizontally and vertically closely packed configuration occupying approximately half the volume of the original fuel assembly configuration. When in this configuration, fuel rods 40 may be deposited in canister 72 as previously described.

It should be understood that consolidation mechanism 70 can be used with various other means for introducing the fuel rods thereinto. For example, a horizontally arranged mechanism for sliding fuel rods 40 into consolidation mechanism 70 could be equally effective.

Therefore, the invention provides a means to remotely consolidate spent nuclear fuel rods for storage.

**Claims**

1. Apparatus for remotely consolidating nuclear fuel rods taken from fuel assemblies in which the fuel rods are supported spaced from each other in first and second perpendicular directions, characterized by row ordering means (80) arranged to accept a plurality of nuclear fuel rods (40) for rearranging said fuel rods (40) into a different configuration, first consolidation means (82) so connected to said row ordering means (80) as to compact individual rows of said fuel rods (40) in said first direction as said fuel rods (40) exit said row ordering means (80) and second consolidation means (84) arranged adjacent said first consolidation means (82) so as to accept individual rows of fuel rods (40) for compacting in the second direction a plurality of fuel rods compacted already in said first direction.

2. An apparatus according to claim 1, characterized in that said row ordering means (80) comprises a first frame (86), a second frame (92), and a plurality of guide tubes (88) having a first end supported by said first frame (86) and having said first end arranged in a configuration for having a plurality of said fuel rods (40) inserted therein in a configuration similar to the configuration of said fuel rods (40) in a fuel assembly (38), and having a second end supported by said second frame (92) and having said second end arranged in a closely packed configuration.

3. An apparatus according to claim 2, characterized in that at least one of said guide tubes (88) is bent between said first frame (86) and said second frame (92).

4. An apparatus according to claims 1, 2 or 3 characterized in that said first consolidation means (82) comprises a first housing (94), and a plurality of first plates (96) disposed in said housing (94) defining a plurality of first spaces (98) therebetween for accommodating rows of said fuel rods (40), said housing (94) and said first plates (96) being arranged in a converging manner so that said rows of fuel rods (40) are compacted as said fuel rods (40) are moved through said first spaces (98).

5. An apparatus according to claim 4, characterized in that said second consolidation means (84) comprises a second housing (106), with a plurality of second plates (96) disposed therein and each of said second plates (96) having a different length and defining a plurality of second spaces therebetween for accommodating a row of said fuel rods (40), and a plurality of rollers (108) disposed in said second housing (106) near the ends of said second plates (96) for contacting rows of said fuel rods (40) as said fuel rods (40) emerge from beyond the end of one of said second plates (96) for bending the rows of said fuel rods (40) into contact with adjacent rows of said fuel rods (40) thereby compacting the rows of said fuel rods (40).

6. An apparatus as claimed in any of claims 1 to 5, characterized by a vertical support structure (22) with a platform (20) supported thereon rotatably about the axis of said vertical support structure (22) wherein a fuel assembly station (24) is attached to said platform (22) for supporting a nuclear fuel assembly (38) and said consolidation means (82, 84) are supported on said platform (22) adjacent said fuel assembly station (24) and a gripper mechanism (32) movably supported on said vertical support structure (22) and capable of gripping fuel assemblies (38) and fuel rods (40) for removing said fuel rods (40) from said fuel assemblies (38) and inserting them into said consolidation means (82, 84) for closely packing said fuel rods (40).

7. An apparatus as claimed in claim 6, characterized in that a canister mechanism (28) is attached to said platform (20) adjacent said consolidation means (82, 84) for holding said fuel rods (40) in a closely packed array.

**Revendications**

1. Appareil pour consolider à distance des barres de combustible nucléaire extraites d'assemblages combustibles dans lesquels les barres de combustible sont supportées des façon espacée les unes des autres dans des première et seconde directions perpendiculaires, caractérisé par le fait qu'il comprend un moyen (80) d'arrangement de rangées disposé de manière à recevoir une pluralité de barres (40) de combustible nucléaire en vue de leur réarrangement suivant une configuration différente, un premier moyen de consolidation (82) associé audit moyen (80) d'arrangement de rangées pour tasser les rangées individuelles desdites barres (40) de combustible dans ladite première direction au fur et à mesure que lesdites barres (40) de combustible quittent ledit moyen (30) d'arrangement de rangées, et un second moyen de consolidation (84) disposé de façon adjacente audit premier moyen de consolidation de manière à recevoir les rangées individuelles de barres (40) de combustible afin de tasser dans la seconde direction une pluralité de barres de combustible déjà tassées dans ladite première direction.

2. Appareil suivant la revendication 1, caractérisé par le fait que ledit moyen (80) d'arrangement de rangées comprend un premier cadre (86), un second cadre (92) et une pluralité de tubes de guidage (88) dont une première extrémité est supportée par ledit premier cadre (86) et lesdites premières extrémités étant disposées suivant une configuration permettant l'introduction dans lesdits tubes d'une pluralité desdites barres (40) de combustible suivant une configuration similaire à la configuration desdites barres (40) de combustible dans un assemblage combustible (38), et dont une seconde extrémité est supportée par ledit seconde cadre (92), lesdites secondes extrémités étant disposées suivant une configuration étroitement serrée.

3. Appareil suivant la revendication 2, caractérisé par le fait qu'au moins un desdits tubes de guidage (88) est coudé entre ledite premier cadre (86) et ledit second cadre (92).

4. Appareil suivant les revendications 1, 2 ou 3, caractérisé par le fait que ledit premier moyen de consolidation (82) comprend un premier cadre (94) et une pluralité de premières plaques (96) disposées dans ledit cadre (94) en délimitant entre elles une pluralité de premiers espaces (98) destinés à loger des rangées desdites barres (40) de combustible, ledit cadre (94) et lesdites premières plaques (96) étant disposés d'une manière convergente de telle sorte que lesdites rangées de barres (40) de combustible soient tassées les unes contre les autres au fur et à mesure qu'elles traversent lesdits premiers espaces (98).

5. Appareil suivant la revendication 4, caractérisé par le fait que ledit second moyen de consolidation (84) comprend un second cadre (106) dans lequel est disposée une pluralité de secondes plaques (96), chacune de ces secondes plaques (96) ayant chacune une longueur différente et délimitant entre elles une pluralité de seconde espaces destinés à loger une rangée desdites barres (40) de combustible, et une pluralité de rouleaux (108) disposés dans ledit second cadre (106) près des extrémités desdites secondes plaques (96) pour porter contre les rangées desdites barres (40) de combustible au fur et à mesure que ces dernières sortent des extrémités d'une desdites secondes plaques (96) pour faire fléchir les rangées desdites barres (40) de combustible et les faire venir en contact avec les rangées adjacentes desdites barres (40) de combustible en tassant ainsi les unes contre les autres les rangées desdites barres (40) de combustible.

6. Appareil suivant l'une quelconque des revendications 1 à 5, caractérisé par le fait qu'il comprend une structure de support verticale (22) sur laquelle une plate-forme (20) est supportée de façon à pouvoir tourner autour de l'axe de ladite structure (22) du support verticale, un poste (24) à assemblage combustible étant fixé à ladite plate-forme (22) pour supporter un assemblage combustible (38), lesdits moyens de consolidation (82, 84) supportés par ladite plate-forme (22) de façon adjacente audit poste (24) à assemblage combustible et un mécanisme de préhension (32) étant supporté de façon mobile dans ladite structure de support verticale (22) et pouvant saisir les assemblages combustibles (38) et les barres (40) de combustible pour enlever ces dernières desdits assemblages combustibles (38) et les introduire dans ledit moyen de consolidation (82, 84) afin de tasser, c'est-à-dire serrer étroitement les unes contre les autres, lesdites barres (40) de combustible.

7. Appareil suivant la revendication 6, caractérisé par le fait qu'un poste (28) à conteneur est fixé à ladite plate-forme (20) de façon adjacente auxdits moyens de consolidation (82, 84) pour maintenir lesdites barres (40) de combustible en un groupe étroitement serré.

**Patentansprüche**

1. Vorrichtung zum fernbetätigten Kompaktieren von aus Brennelementen entnommenen Kernbrennstäben, wobei die Brennstäbe mit gegenseitigen Abständen in ersten und zweiten, zueinander senkrechten Richtungen gehalten werden, gekennzeichnet durch Reihenordnungsmittel (80), due zur Aufnahme einer Vielzahl von Kernbrennstäben (40) zwecks Neuordnung dieser Brennstäbe (40) in eine andere Konfiguration ausgebildet sind, weiter durch erste Kompaktierungsmittel (82), die derart an die Reihenordnungsmittel (80) angeschlossen sind, daß sie die einzelnen Reihen der Brennstäbe (40) in der genannten ersten Richtung verdichten, wenn die Brennstäbe (40) die Reihenordnungsmittel (80) verlassen, und durch zweite Kompaktierungsmittel (84), die anschließend an die ersten Kompaktierungsmittel (82) derart angeordnet sind, daß sie die einzelnen Reihen der Brennstäbe (40) aufnehmen, um eine Vielzahl von bereits in der ersten Richtung kompaktierter Brennstäbe in der zweiten Richtung zu kompaktieren.

2. Vorrichtung nach Anspruch 1, dadurch gekennzeichnet, daß die Reihenordnungsmittel (80) einen ersten Rahmen (86), einen Rahmen (92) und eine Vielzahl von Führungsrohren (88) aufweisen, wobei die Führungsrohre mit ihren jeweils ersten Enden mittels des ersten Rahmens (86) gehaltert sind und diese ersten Enden in einer Konfiguration angeordnet sind, um eine Vielzahl von eingeführten Brennstäben (40) in einer Konfiguration aufzunehmen, die der Konfiguration der Brennstäbe (40) in einem Brennelement (38) entspricht, und wobei die jeweils zweiten Enden der Führungsrohre mittels des zweiten Rahmens (92) gehaltert und in einer dicht gepackten Konfiguration angeordnet sind.

3. Vorrichtung nach Anspruch 2, dadurch gekennzeichnet, daß mindestens eines der Führungsrohre (88) zwischen den ersten Rahmen (86) und dem zweiten Rahmen (92) gebogen verläuft.

4. Vorrichtung nach Anspruch 1, 2 oder 3, dadurch gekennzeichnet, daß die ersten Kompaktierungsmittel (82) ein erstes Gehäuse (94) und eine Vielzahl von ersten Platten (96) aufweisen, die in dem genannten Gehäuse (94) zwischen sich eine Vielzahl von ersten Räumen (98) zur Aufnahme von Reihen der Brennstäbe (40) bilden, und daß das Gehäuse (94) und die ersten Platen (96) derart konvergierend angeordnet sind, daß die Reihen von Brennstäben (40) während des Hindurchführens der Brennstäbe (40) durch die ersten Räume (98) kompaktiert werden.

5. Vorrichtung nach Anspruch 4, dadurch gekennzeichnet, daß die zweiten Kompaktierungsmittel (84) ein zweites Gehäuse (106) mit einer Vielzahl von darin angeordneten zweiten Platten aufweisen, wobei die zweiten Platten (96) jeweils eine andere Länge haben und zwischen sich eine Vielzahl von zweiten Räumen zur Aufnahme einer Reihe von Brennstäben (40) bilden, und außerdem eine Vielzahl von nahe den Enden der zweiten Platten (96) im zweiten Gehäuse (106) angeordneten Rollen (108) aufweisen, die mit den Reihen von Brennstäben (40) Berührung haben, wenn die Brennstäbe (40) über das Ende der jeweiligen zweiten Platte (96) hinauslaufen, um die Reihen von Brennstäben (40) in Anlage an benachbarte Reihen von Brennstäben (40) zu biegen und dadurch die Reihen von Brennstäben (40) zu kompaktieren.

6. Vorrichtung nach einem der Ansprüche 1 bis 5, gekennzeichnet durch eine vertikale Tragkonstruktion (22) mit einer darauf um die Achse der vertikalen Tragkonstruktion (22) drehbaren Plattform (20), wobei eine Brennelementstation (24) zur Halterung eines Kernbrennelements (38) an der Plattform (20) befestigt ist und die Kompaktierungsmittel (82, 84) angrenzend an die Brennelementstation (24) an der Plattform (22) gehalten sind, und wobei ein Greifermechanismus (32) zum Ergreifen von Brennelementen (38) und Brennstäben (40) beweglich auf der vertikalen Tragkonstruktion (22) gehalten ist, um die Brennstäbe (40) aus den Brennelementen (38) herauszunehmen und sie in die Kompaktierungsmittel (82, 84) zum dichten Packen der Brennstäbe (40) einzuführen.

7. Vorrichtung nach Anspruch 6, dadurch gekennzeichnet, daß angrenzend an die Kompaktierungsmittel (82, 84) ein Kanistermechanismus (28) and der Platform (20) befestigt ist, um die Brennstäbe (40) in dicht gepackter Anordnung aufzunehmen.

0 066 695

FIG. I

FIG. 2

FIG. 4

FIG. 5

FIG. 6

FIG. 7

FIG. 8

FIG. 9

FIG. 10

FIG. 12

FIG. 3

FIG. II

FIG. 13

FIG. 14